(19) Europäisches Patentamt
European Patent Office
Office européen des brevets

(11) **EP 3 522 107 A1**

(12) **EUROPEAN PATENT APPLICATION**

(43) Date of publication:
**07.08.2019 Bulletin 2019/32**

(51) Int Cl.:
***G06T 5/00*** (2006.01)      ***H04N 1/407*** (2006.01)
***G06T 5/50*** (2006.01)

(21) Application number: **18305091.3**

(22) Date of filing: **31.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **InterDigital CE Patent Holdings**
**75017 Paris (FR)**

(72) Inventors:
• **CAUVIN, Laurent**
 **35576 Cesson-Sévigné (FR)**

• **JOLLY, Emmanuel**
 **35576 Cesson-Sévigné (FR)**
• **KERVEC, Jonathan**
 **35576 Cesson-Sévigné (FR)**
• **GUERMOUD, Hassane**
 **35576 Cesson-Sévigné (FR)**

(74) Representative: **Huchet, Anne et al**
 **InterDigital CE Patent Holdings**
 **20, rue Rouget de Lisle**
 **92130 Issy-les-Moulineaux (FR)**

(54) **METHOD AND APPARATUS FOR GENERATING HDR IMAGES WITH REDUCED CLIPPED AREAS**

(57) The present invention relates to a method and an apparatus for generating HDR images with reduced clipped areas. The method comprises the steps of:
- receiving a low dynamic range image, called LDR image, and a high dynamic range image, called HDR image, of a scene, said HDR image being obtained by inverse tone mapping applied to the LDR image,
- detecting (11,12) bright areas in said LDR and HDR images,
- determining (13) bright areas of the HDR image, called new bright areas, that are non-present in the LDR image, and
- modifying (14) the luminance of the new bright areas of the HDR image in order to reduce the number of clipped areas in said new bright areas.

Figure 2

EP 3 522 107 A1

**Description**

1. **Technical Field**

The present invention relates generally to the field of high dynamic range imaging (HDR) and addresses the way of expanding the dynamic range of low or standard dynamic range images. More particularly, the invention relates to a method and an apparatus for generating HDR images with reduced clipped areas.

2. **Background Art**

Recent advancements in display technology are beginning to allow for an extended dynamic range of color, luminance and contrast in images to be displayed. The term "images" refers to an image content that can be for example a video or a still picture.

Technologies allowing for an extended dynamic range in luminance or brightness of images are known as high dynamic range imaging, or HDR imaging. A number of display devices having the capability of processing and displaying HDR images with an extended dynamic range are already available for customers. Image capturing devices capable of capturing images with such an increased dynamic range are also being developed. However, HDR images are not yet well widespread and there exists many existing images that are SDR (for Standard Dynamic Range) or LDR (for Low Dynamic Range) images. Therefore, there is a need to visualize low or standard dynamic range (LDR or SDR) images on the recent high dynamic range (HDR) devices.

For this purpose, reverse or inverse tone mapping (ITM) algorithms have been developed. They allow to generate HDR images from conventional (LDR or SDR) images, by using algorithms that process the luminance information of pixels in the images with the aim of recovering or recreating the appearance of the original scene.

Most of the time, the ITM consists in defining a global transfer function which, applied to the LDR input images, increases the dynamic and contrast and generates HDR output images.

A simple ITM could be to apply to the LDR (or SDR) video signal a gamma curve with a constant coefficient, for example equal to 2.4. Some of the other algorithms are more complex and propose to adapt the curve locally and temporally depending on picture characteristics.

Another known solution proposed combines a dynamic expansion while considering local characteristics of the images to avoid noise expansion. The expansion curve is adapted to the content itself meaning that the shape of the curve depends on LDR video features, like a histogram of the grey level of the LDR images for instance, and could be refreshed for each frame.

The transfer function results very often from a trade-off between contrast improvement and the fact to preserve the low and mid-tones of the LDR images and consequently preserve the artistic intent (intent of the colorist or the film director). This trade-off leads sometimes to clipped areas in the bright parts of the images while increasing the contrast. The clipped areas are areas of the image close to the maximum encodable luminance where the detail level is low. Clipped areas can be present in the LDR image and in the HDR image. The clipped areas in the HDR image can correspond to clipped areas already present in the LDR image or clipped areas generated by the inverse tone mapping process. In the present patent application, clipped areas designate more specifically bright areas wherein the detail level is low.

3. **Summary of Invention**

The present disclosure proposes to reduce the clipped areas in the HDR image, and more specifically the clipped areas generated by the ITM process. This reduction of clipped areas is achieved by applying a post-processing to the HDR images obtained by ITM or by adapting the ITM process.

The present disclosure proposes a method for processing images, comprising:

- receiving a low dynamic range image, called LDR image, and a high dynamic range image, called HDR image, of a scene, said HDR image being obtained by inverse tone mapping applied to the LDR image,
- detecting bright areas in said LDR and HDR images,
- determining bright areas of the HDR image, called new bright areas, that are non-present in the LDR image,
- modifying the luminance of the new bright areas of the HDR image in order to reduce the number of clipped areas in said new bright areas.

According to this method, the variation of bright areas between the LDR image and the HDR image is determined and the new introduced bright areas are modified in order to limit the clipped areas in these new bright areas.

According to an embodiment, the bright areas in said LDR image and in said HDR image are detected by converting color values of the LDR image and the HDR image into luminance values and by thresholding the luminance values of the LDR image with a first threshold $Th_{LDR}$ and the luminance values of the HDR image with a second threshold $Th_{HDR}$.

According to an embodiment, if the luminance values of the LDR image are encoded on n bits and the luminance values of the HDR image are encoded on m bits, with m and n being integers such that m>n, $Th_{HDR} \geq 2^{m-n}$ x $Th_{LDR}$.

According to another embodiment, $Th_{HDR} = f(Th_{LDR})$ where f is a transfer function of the inverse tone mapping applied to the LDR image to obtain the HDR image.

According to an embodiment, the new bright areas are determined by subtracting the bright areas of the LDR image from the bright areas of the HDR image.

According to an embodiment, the luminance of the new bright areas of the HDR image is modified by mixing luminance values of said new bright areas of the HDR image with luminance values of areas of the LDR image corresponding to said new bright areas of the HDR image.

According to an embodiment, the luminance of the new bright areas of the HDR image is modified as follows:

$$Y_{HDRmodified} = \alpha * Y_{HDR} + (1 - \alpha) * Y_{LDR}$$

 wherein - a is a predetermined parameter;

- $Y_{HDRmodified}$ is the modified luminance of a pixel of the new bright areas of the HDR image,
- $Y_{HDR}$ is the luminance of the corresponding pixel of the HDR image, and
- $Y_{LDR}$ is the luminance of the corresponding pixel of the LDR image.

According to an embodiment, the parameter $\alpha$ is equal to:

$$\alpha = \frac{255 - Max(Y_{LDR}, Th_{LDR})}{255 - Th_{LDR}}$$

According to an embodiment, the method further comprises obtaining said HDR image by inverse tone mapping applied to the LDR image and the luminance of the new bright areas of the HDR image is modified by modifying at least one parameter of the transfer function of the inverse tone mapping.

According to an embodiment, at least one parameter of the transfer function of the inverse tone mapping is modified until the number of pixels of the new bright areas is greater than a predetermined number N.

The present disclosure also relates to a device for processing images, said device being configured to:

- receive a low dynamic range image, called LDR image, and a high dynamic range image, called HDR image, of a scene, said HDR image being obtained by inverse tone mapping applied to the LDR image,
- detect bright areas in said LDR and HDR images,
- determine bright areas of the HDR image, called new bright areas, that are non-present in the LDR image, and
- modify the luminance of the new bright areas of the HDR image in order to reduce the number of clipped areas in said new bright areas.

According to an embodiment, the luminance of the new bright areas of the HDR image is modified by mixing luminance values of said new bright areas of the HDR image with luminance values of areas of the LDR image corresponding to said new bright areas of the HDR image.

According to an embodiment, the device is further configured to obtain said HDR image by inverse tone mapping applied to the LDR image and wherein the luminance of the new bright areas of the HDR image is modified by modifying at least one parameter of the transfer function of the inverse tone mapping.

The present disclosure also relates to a computer program product comprising program code instructions for implementing the above-defined method, when said program is executed on a computer or a processor

The present disclosure also relates to a non-transitory computer-readable storage medium storing the above-mentioned computer program product.

## 4. Brief description of the drawings

The invention can be better understood with reference to the following description and drawings, given by way of example and not limiting the scope of protection, and in which:

- Figures 1A and 1B are views of a LDR image and a HDR image respectively, the HDR being obtained by inverse tone mapping applied to the LDR image;

- Figure 2 is a flow chart of successive steps of a method according to a first embodiment of the present disclosure;

- Figures 3A and 3B are masks illustrating the results of detection step of the method of Figure 2;

- Figure 4 is a mask illustrating the results of a subtracting step of the method of Figure 2;

- Figure 5 is a view illustrating the modified HDR image resulting from the method of Figure 2;

- Figures 6A, 6B and 6C are views of a LDR image, a HDR image and a modified HDR image respectively illustrating the method of Figure 2;

- Figure 7 is a flow chart of successive steps of a method according to a second embodiment of the present disclosure; and

- Figure 8 is a schematic view of an exemplary embodiment of a device of the present disclosure.

The components in the figures are not necessarily to scale, emphasis instead being placed upon illustrating the principles of the invention.

**5. Description of embodiments**

While example embodiments are capable of various modifications and alternative forms, embodiments thereof are shown by way of example in the drawings and will herein be described in details. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Before discussing example embodiments in more details, it is noted that some example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figures. The processes may correspond to methods, functions, procedures, subroutines, subprograms, etc.

Methods discussed below, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

In the following paragraphs, referring to the drawings, an implementation of the method and the related devices according to an embodiment will be described. A HDR image will designate an image having a higher dynamic range than a LDR or SDR image. The expression "LDR image" will be used to designate a LDR (Low Dynamic Range) image or a SDR (Standard Dynamic range) image. In a more general manner, in the present patent application, a LDR or SDR image designates an image having a dynamic range lower than the one of a HDR image. By contrast, a HDR image designates an image having a dynamic range higher than the one of a LDR or SDR image.

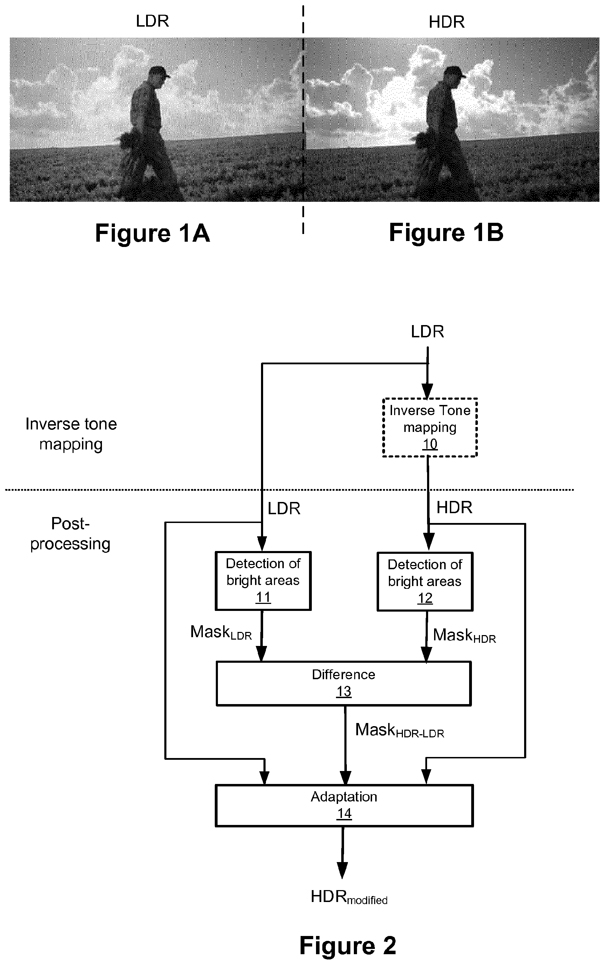

The method according to the invention comprises a plurality of steps and supposes that, for each frame of a video or each image, a LDR version and a HDR version are available, the HDR version resulting from an operation of ITM applied on the LDR version. **Figures 1A and 1B** are examples of LDR image and HDR image that are inputted to the method of invention. These images represent a landscape including a cloudy sky.

Compared to the LDR image (coded for example in 8 bits) of Figure 1A, the HDR image of Figure 1B includes clipped areas, notably in the bright areas of the clouds, wherein detail levels have been lost during ITM process.

The steps of the method according to a first embodiment of the invention are shown in **Figure 2.**

This Figure shows a preliminary step 10 of inverse tone mapping (ITM) for generating a HDR image (to be processed) from a LDR image. This step of ITM may be part of the method of the invention. That is the reason why this step is shown dashed lines.

The ITM process may be of any type. The transfer function of the ITM process is for example a simple gamma curve or a function using an expansion exponent map as disclosed in WO2015/096955. The LDR image may be the LDR image of Figure 1A and the resulting HDR image may be the HDR image of Figure 1B.

According to this embodiment, bright areas are detected in the LDR image and in the HDR image in steps 11 and 12 respectively. The detected bright areas of the HDR image are potential clipped areas.

Each of these two steps may be performed by segmentation. This segmentation can be done using a thresholding operation. Let's take the example of a LDR image in which the RGB values are encoded on 8 bits for each color. The step 11 may consist in first converting the RGB values of the LDR image into luminance values and then thresholding the luminance values with a first threshold $Th_{LDR}$. Likewise, the step 12 may consist in first converting the RGB values of the HDR image into luminance values and then thresholding the luminance values with a second threshold $Th_{HDR}$.

The conversions may be performed by the following by the following equation:

$$Y_{LDR} = 0.299 * R_{LDR} + 0.587 * G_{LDR} + 0.114 * B_{LDR} \qquad [1]$$

$$Y_{HDR} = 0.299 * R_{HDR} + 0.587 * G_{HDR} + 0.114 * B_{HDR} \qquad [2]$$

where

$Y_{LDR}$ is the luminance value of a pixel of the LDR image,
$R_{LDR}$ is the value of the red component of said pixel of the LDR image,
$G_{LDR}$ is the value of the green component of said pixel of the LDR image,
$B_{LDR}$ is the value of the blue component of said pixel of the LDR image, and
$Y_{HDR}$ is the luminance value of a pixel of the HDR image,
$R_{HDR}$ is the value of the red component of said pixel of the HDR image,
$G_{HDR}$ is the value of the green component of said pixel of the HDR image,
$B_{HDR}$ is the value of the blue component of said pixel of the HDR image.

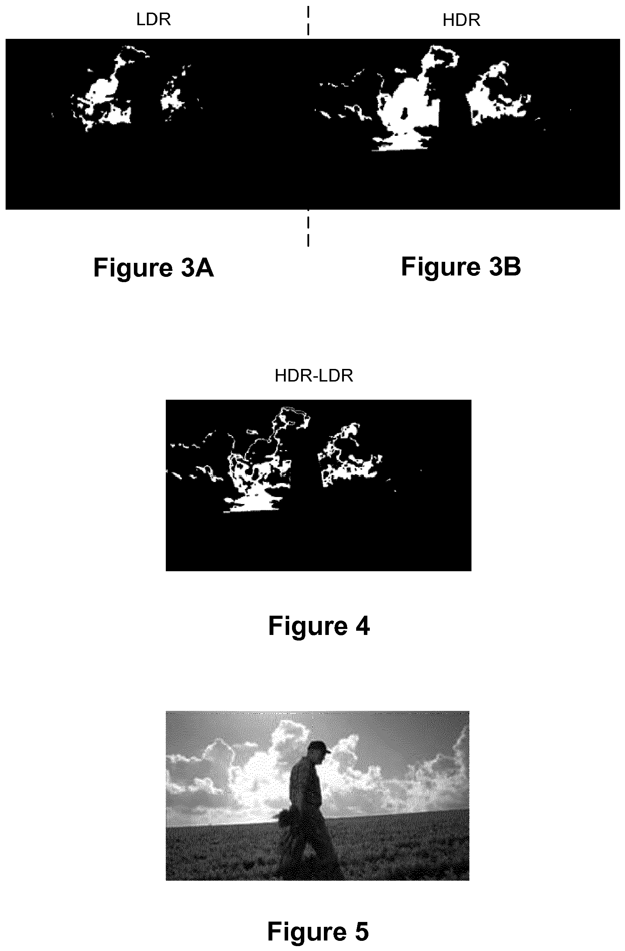

The thresholding operation is then applied to the luminance values resulting from the conversion operation. The results of the thresholding operation are illustrated by the masks $Mask_{LDR}$ and $Mask_{HDR}$ of Figures 3A and 3B.

The masks $Mask_{LDR}$ and $Mask_{HDR}$ are obtained as follows:

If $Y_{LDR} > Th_{LDR}$, $Mask_{LDR}$ = white else $Mask_{LDR}$ = black in Figure 3A.
If $Y_{HDR} > Th_{HDR}$, $Mask_{HDR}$ = white else $Mask_{HDR}$ = black in Figure 3B.

The thresholds $Th_{LDR}$ and $Th_{HDR}$ are defined such that, if the luminance values $Y_{LDR}$ are encoded on n bits and the luminance values $Y_{HDR}$ are encoded on m bits, with m and n being integers and m>n, we have $Th_{HDR} \geq 2^{m-n}$ x $Th_{LDR}$.

The thresholds $Th_{LDR}$ and $Th_{HDR}$ may be constant (fixed) or may be dependent from the image content or from the transfer function of the ITM.

The threshold should be adapted to the number of encoding bits.

If the values $Y_{LDR}$ are encoded on 8 bits (n=8), the threshold, $Th_{LDR}$ is for example equal to 230. As mentioned herein above, this value may depend from the type of image (landscape, indoor,...). The threshold $Th_{LDR}$ could be closer to 255. But the threshold $Th_{LDR}$ is preferably not equal to 225 because, due to the inevitable presence of noise, clipped areas does not mean only pixels at 255.

If the values $Y_{HDR}$ are encoded on 12 bits (m=12), the associated threshold $Th_{HDR}$ is for example equal to $230*(2^4)= 3680$ whatever the transfer function of the ITM is. The threshold $Th_{LDR}$ can be comprised between 3680 and 4095.

In another example, the threshold $Th_{LDR}$ may depend from the transfer function f of the ITM used for generating $Y_{HDR}$. For instance, $Th_{HDR}=f(230)$.

Referring again to Figure 2, the bright areas of the two images are then processed in a step 13 in order to determine the bright areas appeared during the ITM operation. These bright areas are called new bright areas. They are determined by subtracting the bright areas of the LDR image from the bright areas of the HDR image. Thus the step 13 consists in subtracting the bright pixels of the mask $Mask_{LDR}$ from the pixels of the mask $Mask_{HDR}$. It results in a mask Mask$_{HDR-LDR}$ shown in **Figure 4.**

This step aims to separate the clipped areas already present in the LDR image and the new clipped areas that have been "added" by the ITM process in HDR. The underlying idea is to consider that the already clipped areas in the LDR image (advantageously graded by a colorist) can be kept as they are in the HDR image (no details is lost). At the opposite, the "new clipped areas" of the HDR image present in the Mask$_{HDR-LDR}$ (white areas of Figure 4) must be adapted in order to reduce the boost in the highlights. Indeed, the increase of bright areas in the HDR image compared to those in the LDR image shows that the luminance values have been boosted too much during the ITM process.

Thus, in a step 14, the luminance values of the new bright areas (visible on the mask Mask$_{HDR-LDR}$) are adapted to reduce the luminance levels in these areas and, as a consequence, reduce the number of clipped areas in these areas.

According to an embodiment, in step 14, the luminance of the new bright areas of the HDR image is modified by mixing luminance values of the new bright areas of the HDR image with luminance values of the corresponding areas in the LDR image.

For example, the luminance of the new bright areas of the HDR image is modified as follows:

$$\text{For } Y_{HDR} \in Mask_{HDR-LDR}$$

$$Y_{HDRmodified} = \alpha * Y_{HDR} + (1 - \alpha) * Y_{LDR} \qquad [3]$$

wherein

$$\alpha = \frac{255 - Max(Y_{LDR}, Th_{LDR})}{255 - Th_{LDR}}$$

and

- $Y_{HDRmodified}$ is the modified luminance of a pixel of the new bright areas of the HDR image,
- $Y_{HDR}$ is the luminance of the corresponding pixel of the HDR image, and
- $Y_{LDR}$ is the luminance of the corresponding pixel of the LDR image.

According to this formula, the closest the LDR pixel value is from the maximum luminance value (255 in 8 bits) the more the HDR value is mixed with the LDR one.

The equation [3] is applied in a linear domain. The luminance values are then converted in to RGB values. Of course, new corresponding RGB values are calculated to preserve the pixel color.

The results of this process, applied to the images of Figures 1A and 1B, are illustrated by **Figure 5** which represents the resulting HDR image, called HDR$_{modified}$.

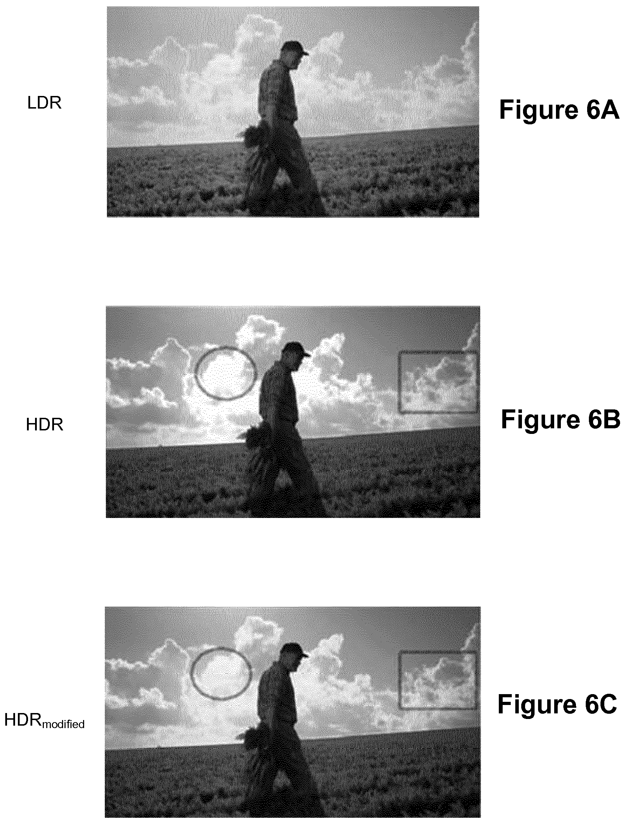

**Figures 6A-6C** are figures allowing to compare the LDR and HDR input images with the HDR output image. Figures 6A- 6B and 6C are equivalent to Figure 1A, 1B and 5 respectively. In figures 6B and 6C, rectangle areas show areas wherein high contrasts are preserved (no adaptation) and circle areas show areas wherein details are recovered (in the modified HDR image).

The above described embodiment is a post-processing method which is applied after the ITM process.

In a variant, the ITM process is part of the inventive method and the ITM process is amended in order to reduce the clipped areas in the HDR image.

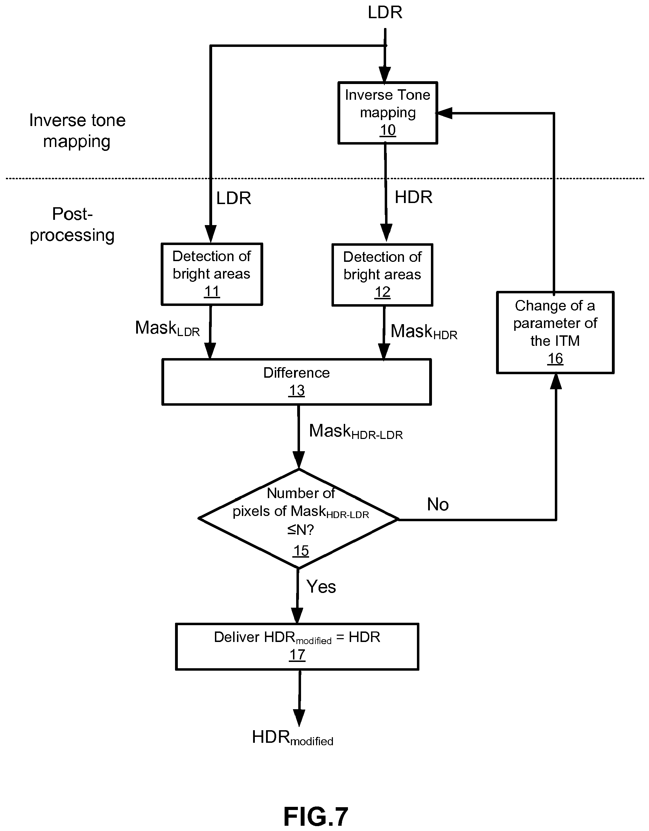

This variant is illustrated by Figure 7. The method comprises the steps 10-13 already described for the previous embodiment.

Unlike the previous embodiment, the HDR image is modified by modifying at least one parameter of the transfer function of the inverse tone mapping (step 10).

According to this variant, the number of pixels of new bright areas (= number of white pixels of the mask Mask$_{HDR-LDR}$) is determined and compared to a predetermined number N in a step 15. The number N may be fixed or depending on the type of image (mindscape, indoor,...). This number can possibly be equal to zero.

If the number of pixels of the new bright areas is greater than N, at least one parameter of the transfer function f of the ITM step 10 is modified in a step 16 in order to reduce the new bright areas.

In one example, the transfer function f can be of the type:

$$Y_{HDR}(p) = Y_{LDR}(p)^{E(p)}$$

where

- $Y_{HDR}(p)$ is the luminance value of a pixel p in the HDR image;
- $Y_{LDR}(p)$ is the luminance value of the pixel p in the LDR image;
- E(p) is a value or set of values associated to the pixel p in an expansion exponent map; the expansion exponent map may be a quadratic function.

The parameter of f to be modified may be a parameter of the quadratic function.

The transfer function of the ITM is modified until the number of pixels of the new bright areas is lower than or equal to N. When this condition is met, the new HDR image (delivered by the ITM process) is the modified HDR image $HDR_{modified}$. This modified image is delivered at step 17.

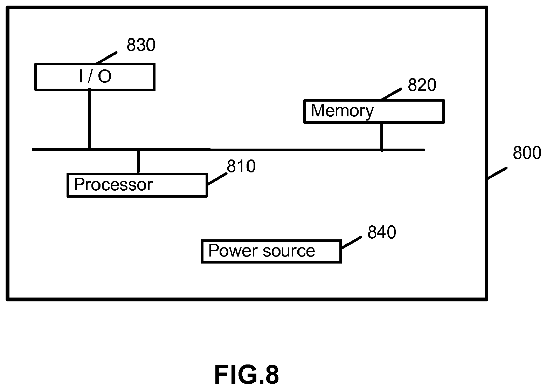

**Figure 8** represents an exemplary architecture of a device 800 configured to process LDR images and HDR images according to any exemplary embodiment of the present disclosure.

The device 800 comprises one or more processor(s) 810, which is(are), for example, a CPU, a GPU and/or a DSP (English acronym of Digital Signal Processor), along with internal memory 820 (e.g. RAM, ROM, EPROM). The device 800 comprises one or several Input/ Output interface(s) 830 adapted to display output information and/or allow a user to enter commands and/or data (e.g. a keyboard, a mouse, a touchpad, a webcam); and a power source 840 which may be external to the device 800. The device 800 may also comprise network interface(s) (not shown). If the device implements the ITM process, the device can receive only LDR images. And if the device does not implement the ITM process, it receives LDR images and HDR images.

According to an exemplary and non-limitative embodiment of the invention, the device 800 further comprises a computer program stored in the memory 820. The computer program comprises instructions which, when executed by the device 800, in particular by the processor 810, make the device 800 carry out the method described with reference to Figures 2 or 7. According to a variant, the computer program is stored externally to the device 800 on a non-transitory digital data support, e.g. on an external storage medium such as a HDD, CD-ROM, DVD, a read-only and/or DVD drive and/or a DVD Read/Write drive, all known in the art. The device 800 thus comprises an interface to read the computer program. Further, the device 800 could access one or more Universal Serial Bus (USB)-type storage devices (e.g., "memory sticks.") through corresponding USB ports (not shown).

According to exemplary and non-limitative embodiments, the device 800 is a device, which belongs to a set comprising:

- a mobile device;
- a communication device;
- a game device;
- a tablet (or tablet computer);
- a laptop;
- a still image camera;
- a video camera;
- an encoding chip;
- a still image server;
- a video server (e.g. a broadcast server, a video-on-demand server or a web server);
- a video uploading platform; and
- a display or a decoding chip.

The implementations described herein may be implemented in, for example, a method or a process, a device, a software program, a data stream, or a signal. Even if only discussed in the context of a single form of implementation (for example, discussed only as a method or a device), the implementation of features discussed may also be implemented in other forms (for example a program). A device may be implemented in, for example, appropriate hardware, software, and firmware. The methods may be implemented in, for example, a device such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a preprocessor providing input to an encoder, a camera, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. Method for processing images, comprising:

   - receiving a low dynamic range image, called LDR image, and a high dynamic range image, called HDR image, of a scene, said HDR image being obtained by inverse tone mapping applied to the LDR image,
   - detecting (11, 12) bright areas in said LDR and HDR images,
   - determining (13) bright areas of the HDR image, called new bright areas, that are non-present in the LDR image, and
   - modifying (14; 10, 15, 16) the luminance of the new bright areas of the HDR image in order to reduce the number of clipped areas in said new bright areas.

2. Method according to claim 1, wherein the bright areas in said LDR image and in said HDR image are detected (11, 12) by converting color values of the LDR image and the HDR image into luminance values and by thresholding the luminance values of the LDR image with a first threshold $Th_{LDR}$ and the luminance values of the HDR image with a second threshold $Th_{HDR}$.

3. Method according to claim 2, wherein, if the luminance values of the LDR image are encoded on n bits and the luminance values of the HDR image are encoded on m bits, with m and n being integers such that m>n, $Th_{HDR} \geq 2^{m-n} \times Th_{LDR}$.

4. Method according claim 2, wherein $Th_{HDR} = f(Th_{LDR})$ where f is a transfer function of the inverse tone mapping applied to the LDR image to obtain the HDR image.

5. Method according to any of claims 1 to 4, wherein the new bright areas are determining by subtracting (13) the bright areas of the LDR image from the bright areas of the HDR image.

6. Method according to any one of claims 1 to 5, wherein the luminance of the new bright areas of the HDR image is modified (14) by mixing luminance values of said new bright areas of the HDR image with luminance values of areas of the LDR image corresponding to said new bright areas of the HDR image.

7. Method according to claim 6, itself depending directly or indirectly from claim 2, wherein the luminance of the new bright areas of the HDR image is modified as follows:

$$Y_{HDRmodified} = \alpha * Y_{HDR} + (1 - \alpha) * Y_{LDR}$$

wherein

- $\alpha$ is a predetermined parameter;
- $Y_{HDRmodified}$ is the modified luminance of a pixel of the new bright areas of the HDR image,
- $Y_{HDR}$ is the luminance of the corresponding pixel of the HDR image, and
- $Y_{LDR}$ is the luminance of the corresponding pixel of the LDR image.

8. Method according to claim 7, wherein the parameter $\alpha$ is defined as follows:

$$\alpha = \frac{255 - Max(Y_{LDR}, Th_{LDR})}{255 - Th_{LDR}}$$

9. Method according to any one of claims 1 to 5, wherein it further comprises obtaining said HDR image by inverse tone mapping (10) applied to the LDR image and wherein the luminance of the new bright areas of the HDR image is modified (15,16) by modifying at least one parameter of the transfer function of the inverse tone mapping.

10. Method according to claim 9, wherein at least one parameter of the transfer function of the inverse tone mapping is modified until the number of pixels of the new bright areas is greater than a predetermined number N.

11. Device for processing images, said device being configured to:

- receive a low dynamic range image, called LDR image, and a high dynamic range image, called HDR image, of a scene, said HDR image being obtained by inverse tone mapping applied to the LDR image,
- detect bright areas in said LDR and HDR images,
- determine bright areas of the HDR image, called new bright areas, that are non-present in the LDR image, and
- modify the luminance of the new bright areas of the HDR image in order to reduce the number of clipped areas in said new bright areas.

12. Device according to claim 11, wherein the luminance of the new bright areas of the HDR image is modified by mixing luminance values of said new bright areas of the HDR image with luminance values of areas of the LDR image corresponding to said new bright areas of the HDR image.

13. Device according claim 11 or 12, wherein it is further configured to obtain said HDR image by inverse tone mapping applied to the LDR image and wherein the luminance of the new bright areas of the HDR image is modified by modifying at least one parameter of the transfer function of the inverse tone mapping.

14. Computer program product comprising program code instructions for implementing the method according to any one of claims 1 to 10, when said program is executed on a computer or a processor

15. Non-transitory computer-readable storage medium storing a computer program product according to claim 14.

LDR | HDR

## Figure 1A | Figure 1B

LDR

Inverse tone
mapping

Inverse Tone
mapping
10

Post-
processing

LDR | HDR

Detection of
bright areas
11

Detection of
bright areas
12

Mask$_{LDR}$ | Mask$_{HDR}$

Difference
13

Mask$_{HDR-LDR}$

Adaptation
14

HDR$_{modified}$

## Figure 2

LDR | HDR

**Figure 3A** | **Figure 3B**

HDR-LDR

**Figure 4**

**Figure 5**

LDR

**Figure 6A**

HDR

**Figure 6B**

HDR$_{modified}$

**Figure 6C**

LDR

Inverse tone
mapping

Inverse Tone
mapping
10

⋯⋯⋯⋯⋯⋯⋯⋯⋯⋯⋯⋯⋯⋯⋯⋯⋯⋯⋯⋯⋯⋯⋯⋯⋯⋯⋯⋯⋯⋯⋯⋯⋯⋯⋯

Post-
processing

LDR

HDR

Detection of
bright areas
11

Detection of
bright areas
12

Change of a
parameter of
the ITM
16

$Mask_{LDR}$

$Mask_{HDR}$

Difference
13

$Mask_{HDR-LDR}$

Number of
pixels of $Mask_{HDR-LDR}$
$\leq N$?
15

No

Yes

Deliver $HDR_{modified}$ = HDR
17

$HDR_{modified}$

**FIG.7**

830

I / O

820

Memory

800

810

Processor

840

Power source

**FIG.8**

Europäisches
Patentamt

European
Patent Office

Office européen
des brevets

# EUROPEAN SEARCH REPORT

**Application Number**

EP 18 30 5091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/264839 A1 (UVAROV TIMOFEY [US] ET AL) 14 September 2017 (2017-09-14) * paragraphs [0020], [0026]; figures 3,4 * | 1-15 | INV.<br>G06T5/00<br>H04N1/407<br>G06T5/50 |
| A | WO 2017/032822 A1 (THOMSON LICENSING [FR]) 2 March 2017 (2017-03-02) * page 7, line 30 - page 8, line 10 * * page 21, line 20 - page 22, line 5 * | 1-15 | |
| A | US 2016/358319 A1 (XU NING [US] ET AL) 8 December 2016 (2016-12-08) * paragraphs [0023], [0025] - [0060] * | 1-15 | |
| A | US 2017/048520 A1 (SEIFI MOZHDEH [FR] ET AL) 16 February 2017 (2017-02-16) * paragraphs [0003], [0032] - [0035], [0041] - [0046], [0059] - [0076], [0101] - [0103] * | 1-15 | |
| A | ABEBE MEKIDES ASSEFA ET AL: "Color Clipping and Over-exposure Correction", 1 January 2015 (2015-01-01), EUROGRAPHICS SYMPOSIUM ON RENDERING - EXPERIMENTAL IDEAS & IMPLEMENTAT, THE EUROGRAPHICS ASSOCIATION, PAGE(S) 75 - 86, XP009190768, ISBN: 978-3-905674-88-0 * the whole document * | 1-15 | TECHNICAL FIELDS SEARCHED (IPC)<br>G06T<br>H04N<br>G09G |

The present search report has been drawn up for all claims

| Place of search | Date of completion of the search | Examiner |
|---|---|---|
| Munich | 18 June 2018 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 5091

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2018

| Patent document cited in search report | | Publication date | Patent family member(s) | | Publication date |
|---|---|---|---|---|---|
| US 2017264839 | A1 | 14-09-2017 | CN | 107172370 A | 15-09-2017 |
| | | | TW | 201801041 A | 01-01-2018 |
| | | | US | 2017264839 A1 | 14-09-2017 |
| WO 2017032822 | A1 | 02-03-2017 | CN | 107949864 A | 20-04-2018 |
| | | | EP | 3341913 A1 | 04-07-2018 |
| | | | KR | 20180044919 A | 03-05-2018 |
| | | | WO | 2017032822 A1 | 02-03-2017 |
| US 2016358319 | A1 | 08-12-2016 | CN | 105745914 A | 06-07-2016 |
| | | | EP | 3072288 A1 | 28-09-2016 |
| | | | US | 2016358319 A1 | 08-12-2016 |
| | | | WO | 2015077329 A1 | 28-05-2015 |
| US 2017048520 | A1 | 16-02-2017 | CN | 106488141 A | 08-03-2017 |
| | | | EP | 3131284 A1 | 15-02-2017 |
| | | | EP | 3131285 A1 | 15-02-2017 |
| | | | JP | 2017037652 A | 16-02-2017 |
| | | | KR | 20170020288 A | 22-02-2017 |
| | | | TW | 201724855 A | 01-07-2017 |
| | | | US | 2017048520 A1 | 16-02-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015096955 A